# EUROPEAN PATENT APPLICATION

(11) **EP 4 841 765 A2**
(43) Date of publication of application: **18.11.2026**
(21) Application number: 26173624.3
(22) Date of filing: 21.04.2026
(51) Int. Cl.: H01M 50/207, H01M 50/224, H01M 50/233, H01M 50/249

(54) **BATTERY TRAY**

(30) Priority: 23.04.2025 CN 202510523519
(71) Applicant: Benteler Automobiltechnik GmbH, 33102 Paderborn (DE)
(72) Inventor: Xing, Tian, Shanghai (CN); Dong, Ding, Shanghai (CN); Xu, Zhao, Shanghai (CN); Jiuhong, Liu, Shanghai (CN); Dawei, Zhang, Shanghai (CN)
(74) Representative: Osterhoff, Utz

(57) **Abstract**

The invention relates to a battery tray (1) formed by deep-drawing from a steel sheet blank with a thickness of between 0.8 mm to 1,6 mm, comprising a bottom and a side wall surrounding the bottom and a flange (6) protruding from the side wall to the outside, the bottom and the side wall establish an inner storage compartment for multiple accumulators, in particular for a powertrain of a new energy vehicle (NEV),
the battery tray (1) comprises edge portions (5.3) where two adjacent side wall portions (3.1) and the bottom are met,
the height (H) of at least two side wall portions (3.1) parallel to each other on opposing sides of the battery tray is at least 85 mm, measured in a plane parallel to the bottom,
the tensile strength of the battery tray is at least 780 MPa at least in the bottom and in the edge portions. At least two edge portions respectively have, in a cross-sectional view taken from the center between adjacent side wall portions, a wavy shape from the bottom up to the flange (6) with successively an inner bottom radius, an outer central radius, an inner upper radius and an outer flange radius, wherein the inner bottom radius and the inner upper radius being convex and the outer center radius and the outer flange radius being concave when viewed from the inner storage compartment of the battery tray.

## Description

### Background Technology

The present invention relates to battery trays for new energy vehicles (NEVs), specifically designed to house multiple accumulators for the powertrain of NEVs. Most modern NEVs have its battery pack stored centrally below the floor of the vehicle structural body between its side sills. The invention builds upon the prior art disclosed in patent publication CN115732831A, which describes a battery tray formed by deep drawing from a steel sheet blank. The tray includes a bottom, side walls, and a flange, creating an inner storage compartment for multiple accumulators. The prior art emphasizes the importance of high tensile strength and durability, achieved through specific measurements for the radii of various portions of the deep-drawn side wall and a method for hot forming and press hardening said tray. Additionally, coating techniques for corrosion protection are described. While space utilization and robustness as well as formability are improved by the teaching of said patent publication, there is further potential for an even better design approach taking more challenging dimensional restrictions like higher battery heights and deep-drawing depth and/or thin sheet blank material into account.

### Detailed Description

The invention is a new battery tray formed by deep-drawing from a steel sheet blank with a thickness of between 0.8 mm to 1.6 mm (Millimeter), comprising a bottom and a side wall surrounding the bottom and a flange protruding from the side wall to the outside, the bottom and the side wall establish an inner storage compartment for multiple accumulators, in particular for a powertrain of a new energy vehicle (NEV). The battery tray comprises edge portions, where two adjacent side wall portions and the bottom are met.

The height of at least two side wall portions parallel to each other on opposing sides of the battery tray is at least 90 mm, preferably at least 95 mm, measured in a plane parallel to the bottom, and the tensile strength (Rm) of the battery tray is at least 780 MPa (Megapascal) at least in the bottom and in the edge portions. Preferably the tensile strength of the battery tray is completely homogeneous.

In order to allow the height of at least 85 mm in the side wall, the essential technical feature of the invention is that at least two edge portions respectively have, in a cross-sectional view taken in the center between adjacent side walls portions, a wavy shape from the bottom up to the flange. Said edge portions can be formed at every of the edges of the battery tray, thereby forming a rectangular bottom and battery tray when viewed from above with rounded edges. Such edges are much more challenging to shape by deep drawing, at least compared to more open angles between adjacent side wall portions which could be present in battery trays that have more than four edges, e.g. a hexagonal or octahedral shape when viewed from above. Therefor the invention focuses on the most challenging edges with an angle of 90° between adjacent side wall portions. However, the beneficial effect of the invention can be applied to battery trays with an angle between side wall portions between (including) 90° and 110°. Other edge portions with larger angles could exist with a more conventional edge design without leaving the scope of the invention.

The flange of the battery tray is arranged at the end of the side wall that is opposite the bottom. The flange protrudes from the side wall to the outside, which means it is formed transverse to the side wall and essentially in a horizontal plane parallel to said bottom of the battery tray.

Said edge between its adjacent side wall portions comprise successively an inner bottom radius, an outer central radius, an inner upper radius and an outer flange radius, wherein the inner bottom radius and the inner upper radius being convex and the outer center radius and the outer flange radius being concave when viewed from the inner storage compartment of the battery tray.

The inner bottom radius is arranged directly adjacent the bottom and extends in a convex curve away from the bottom in the direction of the flange. Adjacent to said inner bottom radius and arranged further away from the bottom is the concave outer center radius. Concave means that the radius direction is opposite to the direction of the convex inner bottom radius. Adjacent to the outer center radius and even further away from the bottom is the inner upper radius that is shaped convex, therefor in the opposite direction than the outer center radius. Last, the outer flange radius is arranged adjacent said inner upper radius and the flange. The direction of the outer flange radius is opposite to the inner upper radius.

According to the invention, all radii mentioned above are measures in cross-sectional view taken in the center of the edge between adjacent side walls portions. In a case of a 90° angle between adjacent side wall portions, "center" means the cross-section cut is at an angle of 45° to the side wall portions (half of the actual angle) and perpendicular to the bottom. In a case of edges having an angle of 100° between the adjacent side wall portions, the cross-section is taken in the center, at 50°.

The inner upper radius is especially important and allows excessive material to flow outwards during deep drawing operation thereby preventing unwanted wrinkles at the corner in the edge and flange portions. On top of that, the fact that the outer center radius is concave allows to store excessive material into a specific uncritical area in a controlled manner, without reducing the relevant inner compartment storage space or negatively influencing the material flow and required drawing strain during forming itself.

The inventors found out that for battery trays having large heights of at least 85 mm and thickness below 1.6 mm, even more so with thickness below 1.4 mm, it is difficult to reliably produce a crack-free product without said wavy shape in cross section of that edge portion and said successive radii of different directions.

The flange itself has a width, measures transverse to its longitudinal extension of at least 30 mm. Even though no maximum width exists, from the standpoint of practicality and space within both a NEV and a deep-drawing production line, the width of the flange preferably should be less than 100 mm over at least most of its length and more preferable the width is 35 mm to 90 mm over all of its length.

The bottom of said battery tray allows a large number or capacity of accumulators to be place onto, to realize large driving distances with a single full charge of the accumulators, and preferably without the help of a range extending combustion engine as an in-drive charging means. To allow such large distance one-charge driving, and in case a single battery tray being used in the NEV, the bottom of the battery tray depending on the overall size and weight of the vehicle has a width of at least 80 cm (Centimeter) and a length of at least 100 cm. More preferably when using only a single battery tray, the width is between 100 cm and 200 cm while the length is between 120 cm and 240 cm.

In the meaning of the invention, battery tray means any can shaped component integrally formed establishing within an inner space for accumulators of NEVs. It can be the lower component when viewed in mounted state in the vehicle with the batteries placed above and preferably on a top surface of the bottom of the battery tray. Alternatively, the battery tray can also be the upper component when viewed in mounted state in the vehicle, so the battery tray acts as an upper enclosure to be tightly joined with a lower component, which might be a flat or a low-height base plate. The accumulators could be fixed with either the bottom of said battery tray, or with the flat or low-height base plate.

### Additional Features

It is preferred that the edge portions have a height of at least 85 mm in order to allow accumulators with greater height to be placed in the inner space of the battery tray.

Preferably said successive radii are arranged without any interruption by any straight or plane wall section. The inventors found that this is important, in order to reliably achieve a drawing depth and battery tray height of more than 85 mm all along the side wall including the edges of the battery tray. This allows the newest generation of accumulators to be used that have increased height. This is especially useful for BEV that follow a so called cell-to-body approach. That means, by avoiding a separate lid for closing the battery tray and using the vehicle floor itself for that purpose, the saved room in vertical direction is used for the increase in accumulator height. In case of steel sheet thicknesses of 1.2 mm or more, the height of the edge can even be 90 mm or more.

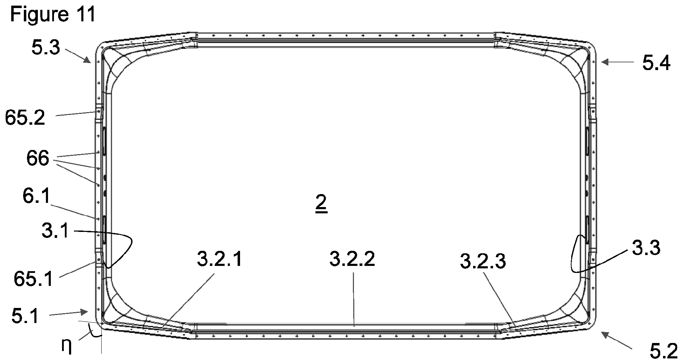

However, it is possible from the formability point of view, to achieve the height of at least 90 mm at two side walls arranged parallel to each other and at opposing sides of the bottom by limiting any straight or plane interruptions of said radii in the edge that might exist to an absolute minimum. This is especially true for steel sheet thicknesses below 1.4 mm and when using the so-called hot-forming and press hardening technique when deep drawing takes place. Therefor in said edge portion a first straight (plane) section of at most 30mm may be arranged between the inner upper radius and the outer central radius, and a second straight (plane) section of at most 25mm can be arranged between the inner upper radius and the outer flange radius. In such a case, preferably an angle between the first plain and the bottom of the battery tray is between 25 and 35° and an angle between the second plane and the bottom is between 40 and 50°. All millimeter and degree units refer to a cross-sectional view of said innovative edge portion. In case of a 90° angle between adjacent side wall portions, the cross section is taken in the center, at 45°. The invention is especially beneficial for edges with side wall portions enclosing an angle of 90° to 110°, most beneficial for an 90° angle. With the help of a vertex angle that is equal to the angle between said adjacent side wall portions, said angle between side wall portions is illustrated in figure 11. For an angle of more than 110°, however the wavy shaped edge becomes ineffective or even unnecessary at all, as the material flow becomes generally easier the more open said angle becomes.

In a further embodiment, the battery tray is hot-formed and press hardened from a Manganese Boron steel (MnB) grade. Such MnB steel is comprising a steel composition of Carbon C) 0.10 to 0.4; Manganese (Mn) 0.8 to 2.0 and Boron (B) 0.0007 to 0.005 and optionally Silicone (Si), Phosphorus (P), Sulfur (S), Aluminum (Al), Chromium (Cr), Copper (Cu), Niobium (Nb), Titan (Ti), Vanadium (V), Molybdenum (Mo), the residual being iron and unavoidable impurities. 22MnB5 or 34MnB4 or 38MnB5 are all examples of such steel grades already in use for hot forming and press hardening technique in the automotive industry. In particular the steel composition is in accordance with one of the steels "A" to "F" in table 1, wherein the battery tray made from "steel A" and "steel B" in press hardened condition have a tensile strength of at least 1350 MPa and at most 1650 MPa, while a tray made from "steel C" or "D" will allow tensile strength of between 1700 and 2100 MPa. The steel microstructure in martensitic with residual austenite, bainite and/or ferrite and perlite might exist only on small fractions, in total preferably not more than 10 area% (percent), in particular not more than 5 area%.

"Steel E" and "F" are more ductile hot forming and press hardening grades with a higher content of bainite and/or ferrite and perlite, while the share of martensite is reduced to between 30 and 60 percent, allowing batteries trays having a tensile strength between 800 and 1100 MPa.

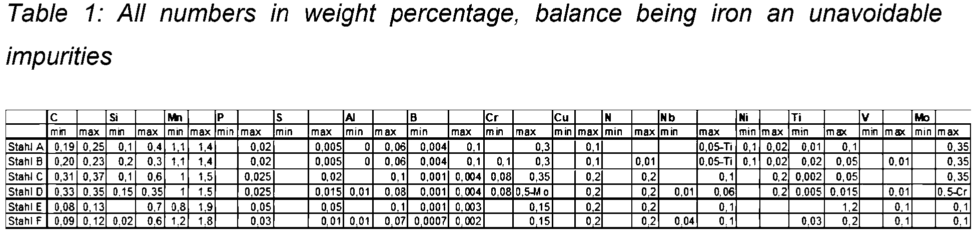

Preferably the hot forming and press hardening of the battery tray takes place in a single stroke and single forming operation, thereby reducing production space and invest costs dramatically to a cold forming multi-stage approach.

As an alternative, multiple hot forming and cooling operations can be applied successively, with the press hardening only being finished subsequently of a first hot forming stroke. After the first forming stroke most of the geometry is already shaped, but the tray is hot enough to be cut and trimmed in the successive press dies where also cooling takes place. For that an adapted steel composition can be applied by using alloy elements that allow more time between austenitization step in a furnace of a hot forming production line and start of martensite transformation, basically reducing the critical quenching speed for martensite transformation from higher than 27 Kelvin per second (K/s) to lower than 20 K/s. Advantage for that multiple step hot forming and press quenching alternative is an higher cycle rate and production output, which could be interesting when already existing large press systems or press streets can be used.

In a further embodiment the battery tray has an inner bottom radius that is between 10 mm to 40 mm and/or 6 to 40 times the thickness of the steel sheet blank. An outer central radius is between 30 mm to 150 mm. An inner upper radius is between 30 mm to 150mm. An outer flange radius is between 5mm to 20 mm and/or 3 to 30 times the thickness of the steel sheet blank. Said dimensions are especially beneficial when upper mentioned hot forming and press hardening technique is applied and one said respective MnB steel grade is being used.

In a further embodiment at least two edge portions of the battery tray further comprise in at least two edge portions a horizontal edge radius between adjacent side wall portions from the flange portion to the bottom along the height. An upper horizontal edge radius between the flange portion and the inner upper radius and measured parallel to the plane of the bottom is between 20 to 80mm. The horizontal edge radius in said at least two edge portions further comprises a lower horizontal edge radius between the bottom and the inner bottom radius and measured parallel to the plane of the bottom is between 150 mm to 250 mm. The horizontal radius decreases from the bottom to the flange continuously and preferable strictly monotone. Such continuous gradient of said horizontal edge radius is beneficial in connection with the wavy shape edge side wall from the bottom up to the flange. Wrinkels are avoided as well as critical thinning during deep drawing, also transversely to the main drawing direction.

In a further embodiment, the flange of the battery tray is divided into at least two plane levels, preferably exactly two plane levels, and extends substantially in horizontal planes parallel to the bottom. While the flange is used to connect in a fluid tight manner a battery cover, also called lid or closing plate, it is possible to adapt the battery cover geometry, e.g. an integrated cover flange, in a way to be compatible with the different plane levels of the battery tray flange. An upper flange portion is at least 10 mm higher, preferably 15 mm to 50 mm higher, measured transverse to the plane of the bottom, than a lower flange portion. The lower flange portion protrudes outwards from the side wall portions of said at least two edge portions (having an angle of 90° between side wall portions) and extends along only a portion of the flange until an upwardly directed step-shaped transition within said flange to the upper flange portion. The upper flange portion extends further along the flange until a downwardly directed step-shaped transition within said flange to the (or another) lower flange portion. To realize the step-shaped transition, the side wall has different heights according to the height difference in the flange. The different height levels of the flange and also of the edge portions and within side wall portions allow the inner storage space to be utilized to the maximum in terms of the available height, while keeping the edge height as low as possible. This in particular allows side wall portions corresponding to the upper flange portion to have a height of more than 100 mm, especially at least 110 mm enabling very flat and simple formed lid and preferably the integration of such battery tray into a cell-to-body NEV concept.

Preferably, the step-shaped transition extends along the flange with a transition length, measured in a horizontal plane, of at least 60 mm. More preferably the length is between 80 mm and 150 mm. This measures and corresponding moderately sloped surface of the flange in the step-shaped transition allow good formability as well as compatibility with a sealant, a screw connection to a battery cover mentioned above and also with additional features of the flange described in further embodiments of the invention.

In a further embodiment, the battery tray has side wall portions between the edge portions that have an angle to the plane of the bottom of at least 95° and at most 110°. This angle is possible when the edges are realized according to the invention. Generally, the closer the angle is to a rectangular 90° angle, the better from the standpoint of inner space utilization for accumulators and auxiliary systems. On the other hand, an angle of lower than 95° is considered contra productive when a height of the at least 85 mm of the battery tray is required, as this would need much larger deep-drawing radii in order to have a sufficient material flow, which deteriorates the space utilization. Also press-hardening by in-mold-quenching of the side walls would be much more difficult to realize due to the reduced surface pressure between upper and lower press molds and enclosed steel sheet of the shaped side walls. To compensate, the time for hardening needs to be increased or expensive mold solutions like horizontal pushers or cam sliders need to be applied, both making production unattractive cost-wise. Therefor, the inventors found an optimized angle is at least 95 and not more than 100°, even more preferred 95° to 97°.

The inventors were able to further increase the battery tray height to equal or more than 90 mm, especially not only in said parallel side wall portions but also in its edges, by a combining the hot-forming and press hardening technique and using a manganese boron steel grade with said wavy shape edge from the bottom up to the flange and said successive radii in said millimeter-ranges for the inner bottom radius, outer central radius , inner upper radius and outer flange radius and also when mentioned specific angle between the side wall and the bottom as well as horizontal edge radius is realized.

In another embodiment, the battery tray is made from a steel sheet blank with tailored properties. The tailored properties can be realized by using a tailored welded blank or a tailored rolled blank with the wall thicknesses of bottom, side wall and/or flange are different from each other. As one example, the side wall portions can be thicker than the bottom, allowing more resistance to side impacts, more tolerance to welding defects when the side wall is joined e.g. to an additional inner and/or outer structural member and taking tightness requirements into account.

But preferably the bottom is made from a thicker or higher strength steel grade than the side wall portions and flange. More preferably the thickness or strength difference is at least 20 percent larger. Such stronger bottom allows increased underride protection function and therefor a safer accumulator space and also potentially safer thermal management space (e.g. cooling plate bottom).

Another application of tailored properties would be to provide a flange with lower strength than the rest of the battery tray. This approach is especially beneficial for joining purposes in connection with press hardened battery trays of tensile strength > 1500 MPa in the rest of the portions, when the flange is not just used for closing tightly the battery inner compartment, but also for direct joining the battery tray to the vehicle body. A softer, more ductile flange could help preventing cracks, both in crash scenarios as well under dynamic loads.

In a further embodiment, the battery tray flange has multiple locally protruding portions constituted as attachment points for fixing the battery tray to the NEV. Protrusion means in that regard, that the within the horizontal plane area of the flange surrounding the side wall of the battery tray, multiple local protrusions are present integrally with the flange, at least along two of the side wall portions on opposing sides of the battery tray and bottom. Such protrusions can be slightly elevated with an elevation height of 3 to 10 mm from said horizontal flange plane for geometry tolerance purposes, e.g. to get a secure distance from screw heads of an airtight lid mounting. But in additional or alternatively, the protruding portion of the flange can be reinforced by integrated ribs. A hole might be arranged in the protruding portion. Said protruding portions of the flange preferably respectively have a length of 30 mm to 150 mm measures along the length of the flange and a protruding width transverse to said length is 10 mm to 100 mm. Such protruding portions of the flange are most preferably not present in edge portions, at least not in edges where side wall portions are enclosing an angle of 90° to 110°. Attached to the protruding portion of the flange can be a nut element or other fixation elements in particular in the location of said hole and in order to make the battery tray easy to be fixed to the vehicle body structure after accumulator mounting and lid fixation has already happened.

In a further embodiment, the flange of the battery tray has a groove - preferably completely - along its length arranged in cross-sectional view between the ultimate outer edge of the flange and the outer flange radius. That groove being constituted to place a glue or sealant inside for tightly closing the accumulator compartment by a lid as cover plate or by the vehicle body floor to be attached to the flange. Said groove of the flange can be relatively small both in its groove height and grove width. Saying that, the groove preferably only has a height of 2 mm to 6 mm and a width of 5 mm to 10 mm. The groove can be arranged straight e.g. directly adjacent the outer flange radius when viewed in cross-section of the battery tray, but it could also be arranged more in the middle in cross section view, e.g. meandric along the flange. That means the groove extends alternatingly on a left side and a right side of adjacent flange holes, said holes being arranged along the whole flange for screw connection with a lid mentioned above.

In another embodiment of the invention, the battery tray comprises an alloyed pre-coating, wherein it is made from a steel sheet blank that is pre-coated for corrosion protection with a metallic alloy based on Aluminum (Al) or Zinc (Zn) or with a multi-layer coating comprising an Al-based alloy on top of a Zn-based alloy. The thickness of said pre-coat is in total not more than 40 µm and not less than 10 µm, the Al-based alloy optionally comprises one or several elements from the group of Si <15wt%, Fe < 10wt%, Mn <5wt%, Mg <5wt%, and REM <1wt%, and the Zn -based alloy optionally comprises one or several elements from the group of Fe <50wt%, Ni <20wt%, Al <20% Si< 10wt%, Cu <5wt%, Cr <10% and REM <2wt%. Such pre-coating is especially useful when hot-forming and press-hardening technology is applied that was described before, because during the furnace heating of the steel sheet blank above the Ac3-temperature (full-austenitization temperature), the pre-coat acts a scale protection of the steel substrate. This is important as the furnace heating during the hot-forming process takes place at between 870°C and 950°C for a period of 2 minutes and 7 minutes depending on the thickness of said steel sheet blank. When an Al-based pre-coating is used, during that heating and austentization for later press-hardening, the pre-coating is alloyed with the steel substrate forming the alloy pre-coating, preferably comprising multiple different coating layers with different contents of Fe from the steel substrate and different share of Al from the pre-coating itself. Such alloyed layer in heated condition is perfect in terms of formability and grease functionality during deep-drawing as hot-forming and later also as a limited corrosion protection means. Therefore, proposed pre-coated steel sheet blanks are used to its best combination with the steel grades for hot forming mentioned above and in table 1.

In combination with Zn as an alternative or additional pre-plating layer, a passive galvanic corrosion protection function can be used with superior resistance in harsh environment conditions existing in the under body of a motor vehicle.

In another embodiment of the invention, the battery tray comprises a cataphoretic coating, which also can be called KTL paint) in particular on top of a pre-coating as described above. The secondary coating improves corrosion protection especially in case of a single Al-based or Zn-based pre-coating is provided on the steel sheet blank. The secondary coating has a thickness of 10 to 100 µm (micrometer).

In another embodiment of the invention, the battery tray comprises a top-coating on top of a pre-coating or a secondary coating, at a lower surface of the bottom and optionally at the lower surface of the side wall. Said top-coating is a stone chipping protection coating from a material selected from the group of synthetic resin, reactive resin, urethane, polyurethan (PUR), polyurea, polyvinyl chloride (PVC), elastomer, rubber, bitumen, asphalt, tar. The stone chipping protection top coating has a thickness of 200 µm (Micrometer) to 3 mm (micrometer). This embodiment allows to use the battery tray as an integrated underride protection to avoid additional heavy shield plates placed below the battery tray. In combination with the application of hot-forming and press-hardening technique and MnB steel grades described above, in particular when the steel sheet thickness ins chosen to be on the higher end of claimed range, this will also be useful for over-ride scenarios like the NEV being hit centrally from below during driving above an obstacle like a large stone or the car hitting a curb to fast.

In another embodiment of the invention, the battery tray further comprises a channel groove structure integrally formed with the bottom and a closing plate fluid-tightly fixed with a surface of the bottom to constitute a heat exchanger for heating and/or cooling the accumulators that are to be placed on top of the bottom or on top of the closing plate. More preferably, at least one inlet portion having a first opening and one outlet portion having a second opening are formed integrally with the bottom and fluid-connected to the channel groove structure. This allows a function integration of a part of a thermal management fluid system into the battery tray itself, thereby potentially avoiding separate metal sheet components like a cooling plate to be added and fixed in the inner battery compartment space.

In another embodiment of the invention the battery tray comprises multiple structural beams inside the tray and surrounded by the side walls and fixed to the side wall and/or fixed to the upper surface of the bottom of the battery tray. The inner structural beams further reinforce the whole battery tray and optionally also could provide individual spaces for individual battery cells, packs or modules. Preferably at least one inner structural beam has one or more holes or one or more nut elements to allow a screw connection for fixing the battery tray to the NEV. For such connection, also a lid (cover plate) and the bottom of the floor might have holes corresponding to said holes in the structural beams.

According to another embodiment, structural rails arranged outside the battery tray and below the flange and preferably fixed to at least two side wall portions parallel to opposing sides of the battery tray. The structural rails have holes or nut elements to allow a screw connection for fixing the battery tray to the NEV, especially to side sills of the NEVs body frame. The rails might be roll-formed or hot-formed and press-hardened components used for and energy absorption and further side protection of the accumulators and/or as connecting means for fixing the battery tray to the vehicles. As an alternative of fixing the structural rails directly to the side wall of the battery tray, it is also possible to arrange it close or in contact with the side wall without any mechanical connection. Instead, a connection with additional lower brace arranged along the bottom and attached to the bottom of the battery tray and to said rails could be established.

### Detailed description of figures

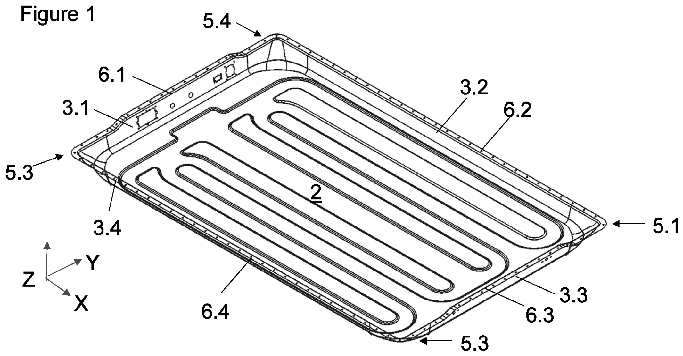

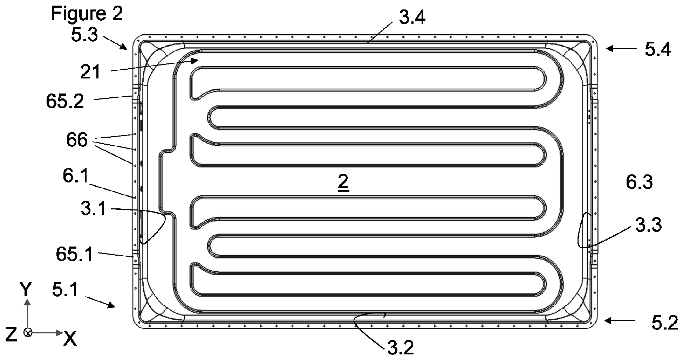

Figure 1 shows schematically a first embodiment of the invention in a slightly elevated perspective view. The battery tray has a bottom 2 parallel to a horizontal plane when mounted to a motor vehicle. The bottom 2 is surrounded all around by a side wall 3 made in one piece integrally with the bottom. The side wall 3 consists in that example of four side wall portions 3.1 to 3.4, two adjacent side wall portions are connected by an edge or edge portion 5.1 to 5.4 respectively. In other words, each edge portion connects integrally the bottom with two adjacent side wall portions, e.g. edge portion 5.1 connects side wall portion 3.4 and 3.1 with the bottom 2. On the upper end of the side wall 2, a flange 6 is protruding outwards away from an inner accumulator space which is enclosed by the side wall 2. The flange 6 extends all along the side wall. The flange comprises multiple holes along its length allowing a screw connection of the battery tray with a lid or other closing plat like the vehicle body floor plate. Details of the edges and flange can be seen in figure 2 to 5 of this embodiment.

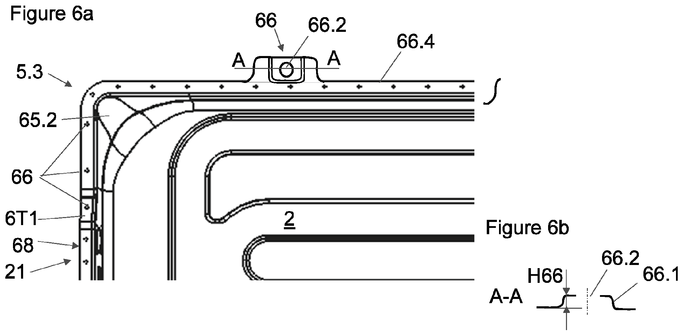

Figure 2 shows a top view of the battery tray according to figure 1. The bottom and tray have a general rectangular surface therefor four basically straight side wall portions connected by four edges. Other general surface geometries of the bottom could be hexagonal or octahedral with addition side wall portions respectively. All edges provide an angle of 90° between adjacent side wall portions. The flange has flange portions of different height levels. In this case, two height levels are provided within a first portion 6.1 and a third flange portion 6.3 on the opposite side of the battery tray. This can be seen more closely in figure 6. In order to constitute two different flange planes, two step-shaped transitions 65.1 and 65.2 are provided in the first side wall portion 6.1 and also in the third side wall portion 3.3. An vertex angle η illustrates and is identical to the actual angle between adjacent side wall portions 3.1 and 3.2 of the edge 5.1. Said angle is 90° in all four corners of the first embodiment.

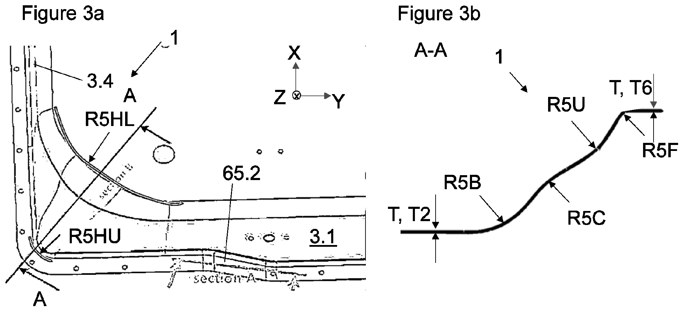

Figure 3a is an enlarged top view close to an edge portion 5.3 of the battery tray of figure 2. The cross-section view A-A through that edge portion 5.3 is shown in figure 3b. The cross-sectional view is taken in the center between adjacent side walls portions 3.1, 3.4. In this case, the "center" means the cross-section cut is at an angle of 45° to the side wall portions 3.1 and 3.4 and perpendicular to the bottom 2. A relatively large upper horizontal edge radius R5HU is formed in the range of is between 20 mm to 80 mm, which is measured in a horizontal plate parallel to the bottom and right between and the flange 5 of the edge potion 5.1 and an outer flange radius shown in figure 3b. A relatively small lower horizontal edge radius R5HU parallel to the bottom is formed between the bottom 2 and an inner bottom edge radius R5B also shown in figure 3b. Said radius R5HL is between 150 mm to 250 mm As can be seen, the upper horizontal edge radius is much smaller than the lower and the horizontal edge radius generally increases monotonic from the flange down to the bottom.

Figure 3b illustrates the innovative wavy edge geometry with four successive radii. As illustrated in figure 3b, the radii are measured in the 45° cross section view of the edge portion 5.3, taken in the center between adjacent side walls portions 3.1 and 3.4. From the bottom 2, an inner bottom radius R5B is formed which is convex when looked from the inner compartment space of the battery tray. The inner bottom radius R5B is between 10 mm to 40 mm and/or 6 to 30 times the thickness T of the steel sheet blank. An outer center radius R5C above and adjacent to the inner bottom radius is formed with a concave shape, the outer central radius R5C is between 30 mm to 150 mm. Directly above the outer center radius, an inner upper radius R5U follows which is convex in shape and arranged between the outer center radius and an outer flange radius R5F. The inner upper radius R5U is 30 mm to 150 mm. Finally, the outer flange radius R5F is directly bordering the flange and is between 5 mm to 20 mm and/or 3 to 15 times the thickness T of the steel sheet blank.

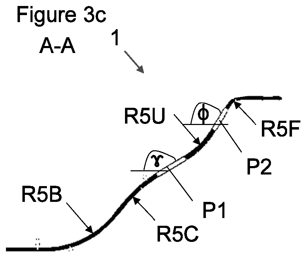

Figure 3c is a modification of the first embodiment shown in figure 1, 2 and 3a and 3b. It shows the same perspective as the cross-sectional view of figure 3b, but in a slightly different battery tray 1. Similary to the edge of figure 3b, the second embodiment of figure 3c comprises in at least two of its edge portions 5.3 a wary progression between the flange 6 and bottom 2 along the vertical direction of the side wall. Four radii with similar reference numbers as figure 3b are present. Two differences can be seen in the cross-section. Said edge portion 5.3 comprises an additional first straight section P1 of at most 30 mm arranged between the inner upper radius R5U and the outer central radius R5C. A second straight section P2 of at most 25 mm is arranged between the inner upper radius R5U and the outer flange radius R5F. This straight sections in cross-section would form two small plane wall sections in a perspective view (not shown). An angle γ between the first plane section P1 and the bottom 2 is between 115° and 125° and an angle ϕ between the bottom and the second plane section P2 is between 130 and 140°. This first straight section would be formed in a schematic view as a small plane wall section.

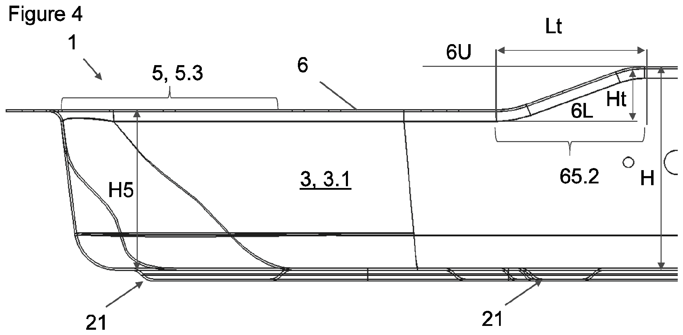

Figure 4 is a detailed side view showing the part of the side wall 3.1 of figure 2, its edge portion 5.3 and the flange 6 or flange portion 6.1 of the first embodiment shown in the previous figures. As explained above, the battery tray has two flange levels with the first lower flange portion 6L being lower than a second higher flange portion 6H. Both planes are vertically offset with a transition height Ht of between 15 mm and 50 mm and connected by a step-shaped transition. The transition is rather smooth with a sloped flange transition from the lower plane level to the second higher flange plane. The transition length Lt is between 60 mm and 150 mm. Even if only one flange transition 65.2 is shown in figure 4, according to the invention at least four are present in the battery tray 1 embodiments. The flange transitions 65 preferably are all of similar geometry in terms of transition length and transition height. However, in special cases, e.g. when different heights of all side wall portions are required, it is possible that the battery tray has a flange and side wall with more individual flange transitions.

Figure 4 also shows the height H of the battery tray 1 in its largest extend, between the upper flange portion 6U and the lower flange portion 6L. The lower flange portion 6L also is provided in the edge portion 5.3, so that the height of the edge portion H5 is reduced by the transition height Ht from the maximum height H of the battery tray. The vertical sloped lines illustrated in figure 4 are, when viewed from the left to the right in the area of the side wall, a first border line to the straight side wall portion and representing the beginning of the edge portion 5.3, than a wavy shaped edge line corresponding mostly to figure 3b, than the second border line representing the end of the edge portion 5.3 and the beginning of adjacent wall section 3.1.

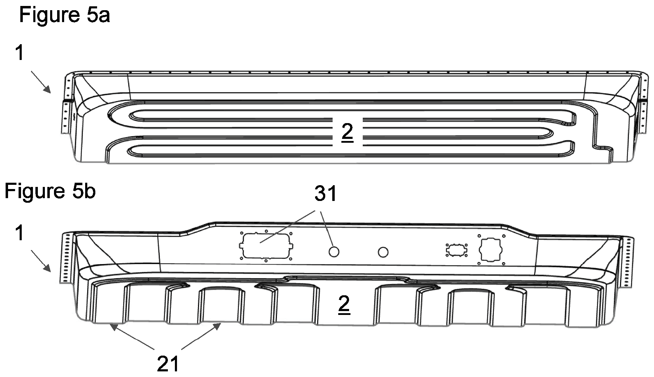

Figure 5a and 5b a longitudinal and transversal sections views of the center of the battery tray according to the first embodiment of the invention. It can be seen that the bottom 2 has multiple buffer elements 21 formed integrally (during deep drawing) as longitudinal grooves with a groove distance smaller than a width of each groove. This buffer elements will reinforce and stiffen the bottom of the battery tray significantly. Even though the buffer height Hb is quite small in the range of 5 mm to 15 mm only, the additional distance to the upper surface of the bottom allows acceptable security space for mechanical accumulator protection against from below. The bottom 2 has a first upper surface 2U that is arranged directly adjacent the inner bottom radius R5B along the side wall. This upper surface 2U also is present between the buffer elements 21. This upper surface might be in contact with the accumulators and/or where the batteries are placed at.

Instead of longitudinal grooves shown in figure 5a and 5b, there could instead also be arranged smaller more symmetric buffer elements. Different kind and sizes of openings 31 could be present in the side wall, in particular in one or two side wall portions only, e.g. for electric high-voltage connection, BMS cables, for thermal fluid pipes and for internal over-pressure compensation means. In all cases, these openings 31 need to be sealed before mounting the battery tray with installed accumulators to the body framework of the NEV.

Figure 6 shows an addition embodiment of the battery tray 1 according to the invention which can be combined with the two embodiments disclosed in figure 1 to 5. This embodiment can be identical to previous explained embodiments but with a different flange feature. The flange 5 has multiple protruding portions 66 along the length of at least two flange portions 6.2, 6.4 on opposing sides of the bottom 2 of the battery tray 1. Each protruding portion 66 constitute attachment points for fixing the battery tray to the NEV. Said local protrusions are formed integrally with the flange. The protrusions portions 66 are slightly elevated with an elevation height H66 of 3 mm to 10 mm from said horizontal flange plane. This is due to geometry tolerance purposes, e.g. to get a secure distance from screw heads of an airtight lid mounting. But in additional or alternatively, the protruding portion 66 of the flange 6 can be reinforced by integrated ribs 66.1 that can be seen better in in the section cut view A-A of figure 6b. A hole 66.2 is arranged in the protruding portion 66. Said protruding portion 66 of the flange 6 has a length of 30 mm to 150 mm measures along the length of the flange 6 and a protruding width W66 transverse to said length is 10 mm to 100 mm. Such protruding portions 66 of the flange 5 preferably are not present in the edges 5. Attached to the protruding portion of the flange 5 can be a nut element or other fixation elements in particular in the location of said hole in order to make the battery tray easy to be fixed to the vehicle body structure after accumulators mounting and lid fixation has already happened.

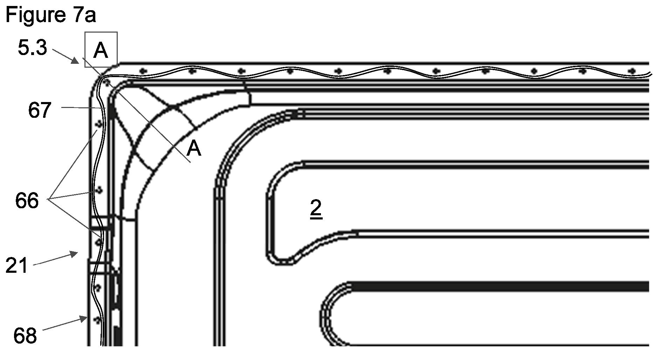

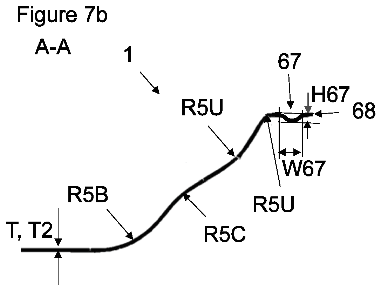

In Figure 7a and 7b, a further modification of the flange 5 is illustrated, while the other features of the battery tray 1 are essentially similar to one of the previous embodiments of figures 1 to 6. The battery tray differs insofar as the flange 5 has a groove 67 - preferably completely - along its length and arranged in cross-sectional view between the ultimate outer edge 68 of the flange 6 and the outer flange radius R5F. That groove 67 being constituted to place a glue or sealant inside for tightly closing the accumulator compartment by a lid as cover plate or by the vehicle body floor to be attached to the flange (not shown). Said groove 67 of the flange 6 is relatively small both in its groove height H67 and grove width W67 which can be seen in figure 7b. The groove preferably only has a height of 2 mm to 6 mm and a width of 5 mm to 10 mm. The groove 67 is arranged in cross sectional view in the middle of the flange 6 and runs meandric along the flange 6. That means the groove 67 extends alternatingly on a left side and a right side of adjacent flange holes 66, said holes 66 being arranged along the whole flange for screw connection with a lid or other closing plate (not shown). Alternatively, the groove 67 runs straight along the flange 6 directly adjacent the outer flange radius R5F and with a groove height H67 and width W67 similar to the ranges mentioned above.

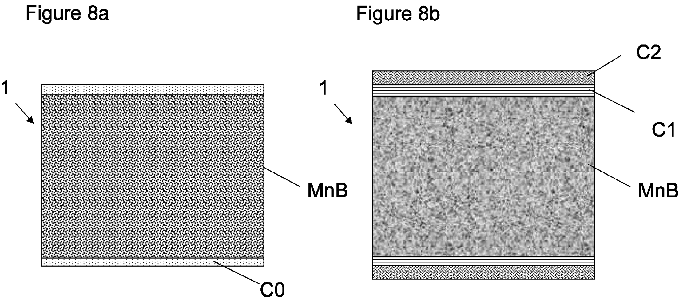

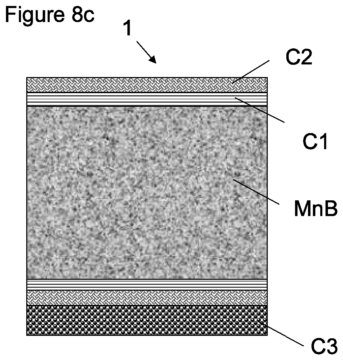

Figure 8a to 8c illustrate steel sheet material in a schematic cross-sectional view having a steel substrate MnB made from manganese boron steel grade. In figure 8a is illustrated the material before at hot forming technique is applied and the microstructure is ferrite and perlite mainly. At both of its outer surfaces a metallic pre-coating layer C0 is provided, e.g. Al-based coating. Figure 8b illustrates the same steel sheet after hot forming and press hardening, when the pre-coating layer is transformed into an alloyed pre-coating C1. The substrate ais transformed to a martensitic microstructure. On top of that is arranged a secondary coating as cathodic coating C2. The secondary coating C2 is applied after press-hardening. In figure 8c an modification of that embodiment is shown. An additional top-coating is added at the secondary coating only at the top of the lower surface 6L of the bottom. According to the invention, the coatings shown in figure 8b and 8c can be applied to any battery tray embodiment described before.

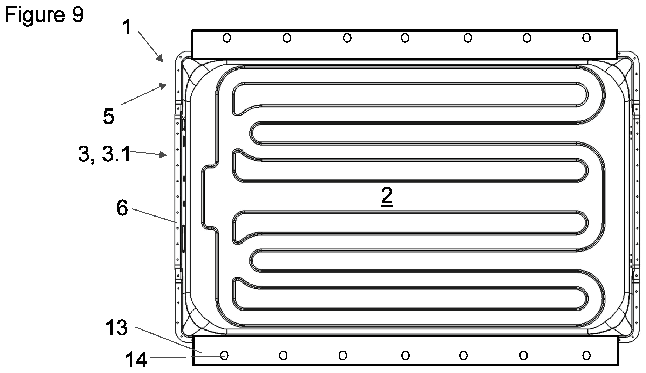

Figure 9 corresponds to a top view similar to the first embodiment according to figure 2. Here the battery tray 1further comprises inner structural beams 11 arranged in the interior of the battery tray, in this case in transverse direction. The structural beams 11 may have holes 12 for screws or bolts to fix the battery tray to the NEV body e.g. seat crossbars.

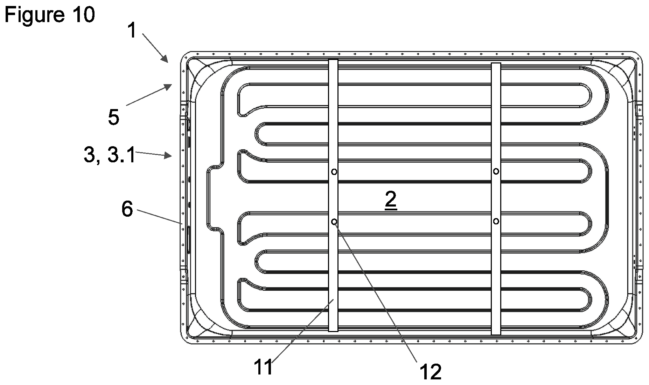

Figure 10 corresponds to bottom view mostly similar to the first embodiment according to figure 2. In this battery tray, now viewed from below, an outer structural rail 13 is arranged below the flange portion on each longitudinal side wall portion. Said structural rails 13 may be fixed directly to the side wall 3 from outside the battery tray, or it may be fixed to the battery tray 1 with the help of additional structural braces (not shown) arranged below the bottom and fixed to the bottom and both structural rails 13. The structural rails 13 have a plurality of holes 14 for fixing said rails and the battery tray 1 to the NEV body, e.g. to side sills of the vehicle.

Figure 11 shows another embodiment of the invention. Here the battery tray 1 and its bottom 2 have in top view an octahedral shape with slightly sloped side wall portions 3.2.1, 3.2.3 on its longitudinal side connected by side wall portion 3.2.2. The edge portions 5.1 and 5.2 have respectively an angle between the shorter side wall portions 3.1 or 3.3 and the slightly sloped wall portions 3.2.1 or 3.2.3 respectively. Said angle is illustrated by vortex angle η equal to the actual angle between the adjacent side wall portions. Due to the sloped side wall portions at the longitudinal side of the battery tray, the angle is about 100° in this embodiment, which is slightly larger than the 90° angle in all previous embodiments. Such an angle still benefits from the wavy shaped edge according to the invention. In this embodiment, the bottom 2 does not comprise buffer elements 21 or channel groove structures 22. This flat bottom design could be beneficially in the case when the bottom 2 of the battery tray 1 is reinforced by fluid-tightly fixing a cooling plate from below (outside the accumulator compartment), wherein the cooling plate has a channel groove structure. This arrangement of a battery tray and attached cooling plate allows a cost efficient and effective temperature control of the accumulators.

**Reference list:**

| | | | |
|---|---|---|---|
| 1 | Battery tray | C0 | pre-coating |
| 2 | Bottom | C1 | Alloyed pre-coating |
| 2U | Upper surface of 2 | C2 | Secondary coating |
| 21 | Buffer element | C3 | Top-coating |
| 22 | channel groove structure | 11 | (inner) structural beam |
| 3 | Side wall | 12 | Holes of 11 |
| 3.1 -3.4 | Side wall portion | 13 | (outer) structural rail |
| 31 | Opening to 3 | 14 | Holes of 13 |
| 5 | Edge | | |
| 5.1 - 5.4 | Edge portion | α | Angle between side wall portion and bottom |
| 6 | Flange | ß | Angle between adjacent side wall portions |
| 6.1 - 6.4 | Flange portion | P1 | First plane (straight) section of edge portion |
| 6U, 6L | Lower and upper flange portions of 6 | P2 | Second plane (straight) section of edge portion |
| 65 | Step shaped transition | γ | Angle between P1 and bottom |
| 66 | Protruding portion of 6 | ϕ | Angle between P2 and bottom |
| 66.1 | rib of 66 | η | Angle between adjacent side wall portions |
| 66.2 | Hole of 66 | H | Height of 1 |
| 67 | Groove of 6 | | |
| 68 | Ultimate outer edge of 6 | H5 | Height of edge portion |
| R5B | Inner bottom radius | R5HL | Lower horizontal edge radius |
| R5C | Outer center radius | R5HU | Upper horizontal edge radius |
| R5U | Inner upper radius | | |
| R5F | Outer flange radius | | |

## Claims

1. Battery tray (1) formed by deep-drawing from a steel sheet blank with a thickness (T) of between 0.8 mm to 1,6 mm, comprising a bottom (2) and a side wall (3) surrounding the bottom and a flange (6) protruding from the side wall to the outside, the bottom and the side wall establish an inner storage compartment for multiple accumulators, in particular for a powertrain of a new energy vehicle (NEV),
the battery tray (1) comprises edge portions (5.1, 5.2, 5.3, 5.4) where two adjacent side wall portions (3.1, 3.2, 3.3. 3.4) and the bottom (2) are met,
the height (H) of at least two side wall portions (3.1, 3.2, 3.3, 3.4) parallel to each other on opposing sides of the battery tray is at least 85 mm, measured in a plane parallel to the bottom,
the tensile strength (Rm) of the battery tray is at least 780 MPa at least in the bottom and in the edge portions, **characterized in that**
at least two edge portions respectively have, in a cross-sectional view taken from the center between adjacent side wall portions, a wavy shape from the bottom (2) up to the flange (6) with successively an inner bottom radius (R5B), an outer central radius (R5C), an inner upper radius (R5U) and an outer flange radius (R5F), wherein the inner bottom radius and the inner upper radius being convex and the outer center radius and the outer flange radius being concave when viewed from the inner storage compartment of the battery tray.

2. Battery tray (1) according to claim 1, said successive radii (R5B, R5C, R5U, R5F) are arranged without any interruption by a plane (straight) section.

3. Battery tray (1) according to claim 1, the battery tray (1) is hot-formed and press-hardened from a manganese boron steel grade (MnB steel) comprising a steel composition of C: 0.10 to 0.4; Mn: 0.8 to 2.0 and B: 0.0007 to 0.005 and optionally Si, P, S, Al, Cr, Cu, Nb, T, V, Mo, the residual being iron and unavoidable impurities, in particular the steel composition is in accordance with one of the steels A to F in table 1.

4. Battery tray (1) according to at least one of the preceding claims, said inner bottom radius (R5B) is between 10 mm to 40 mm and/or 6 to 40 times the thickness (T) of the steel sheet blank, the outer central radius (R5C) is between 30 mm to 150 mm, the inner upper radius ( R5U) is 30 mm to 150 mm and the outer flange radius (R5F) is between 5 mm to 20 mm and/or 3 to 20 times the thickness of the steel sheet blank.

5. Battery tray (1) according to at least one of the preceding claims, said at least two edge portions further comprise an horizontal edge radius between adjacent side wall portions (3.1, 3.2) from the flange (6) to the bottom (2) along the height (H, H5), an upper horizontal edge radius (R5HU) between the flange portion (6.1, 6.2, 6.3, 6.4) and the inner upper radius (R5U) and measured parallel to the plane of the bottom is between 20 mm to 80 mm.

6. Battery tray (1) according to claim 5, said horizontal edge radius further comprises a lower horizontal edge radius (R5HL) between the bottom (2) and the inner bottom radius (R5B) and measured parallel to the plane of the bottom is between 150 mm to 250 mm.

7. Battery tray (1) according to at least one of the preceding claims, the side wall portions (3.1, 3.2, 3.3, 3.4) have between the edge portions (5.1, 5.2, 5.3, 5.4) an angle (α) to the plane of the bottom (2) of at least 95° and at most 110°, preferably at least 95° to at most 100°, more preferably from 95° to 97°.

8. Battery tray (1) according to at least one of the preceding claims, the flange (6) being divided into two plane levels (LU, LL) and extends substantially in horizontal planes parallel to the bottom (2), an upper flange portion (6U) is at least 10 mm higher, preferably 15 mm to 50 mm higher, measured transverse to the plane of the bottom, than a lower flange portion (6L), the lower flange portion protrudes outwards from the side wall (3) of said at least two edge portions and extends along only a portion of the flange (6) until an upwardly directed steps-shaped transition (65, 65.1, 65.3) within said flange to the upper flange portion, the upper flange portion (6U) extends further along the flange until a downwardly directed step-shaped transition (65.2, 65.4) within said flange to the (or another) lower flange portion (6L).

9. Battery tray (1) according to claim 7, the step-shaped transition (65.1, 65.2, 65.3, 65.4) extends along the flange (6) with a transition length (Lt) measured in a horizontal plane parallel to the bottom (2) of at least 60 mm.

10. Battery tray (1) according to at least one of the preceding claims, the steel sheet is a tailored welded blank or a tailored rolled blank with the wall thicknesses (T2) of bottom (2), wall thickness (T3) of side wall (3) and/or wall thickness (T6) of the flange (6) are different from each other, the side wall (2) being thinner than the bottom (2).

11. Battery tray (1) for a NEV, according to at least one of the preceding claims, the flange (6) has multiple locally protruding portions (66) constituted as attachment points for fixing the battery tray to the NEV.

12. Battery tray (1), according to at least one of the preceding claims, the flange having a groove (67) completely along its length arranged in cross-sectional view between its ultimate outer edge (68) and the flange radius (R5F), the groove being constituted to place a glue or sealant inside for tightly closing the accumulator compartment by a cover plate or vehicle body floor to be attached to the flange.

13. Battery tray (1) according to at least one of the preceding claims, the battery tray comprises a comprises an alloyed pre-coating (C1), wherein the steel sheet blank is pre-coated for corrosion protection with a metallic alloy based on Al or Zn or a multi-layer coating comprising a Al based alloy on top of a Zn-based alloy, the thickness of said pre-coating (1) is in total not more than 40 µm and not less than 10 µm, the Al-based alloy optionally comprises one or several elements from the group of Si <15wt%, Fe <30wt%, Mn <5wt%, Mg <5wt% and REM <1wt%, and the Zn -based alloy optionally comprises one or several elements from the group of Fe <50wt%, Ni <20wt%, Al <20% Si< 10wt%, Cu <5wt%, Cr <10% and REM <2wt%.

14. Battery tray (1) according to claim 13, comprising a secondary coating (C2) on top of a pre-coating (C1), the secondary coating is a cataphoretic coating.

15. Battery tray (1) for a NEV according to at least one of the preceding claims, comprising a top-coating (C3) on top of a pre-coating (C1) or a secondary coating (C2) at a lower surface of the bottom (2) and optionally at the lower surface of the side wall (3), the top-coating (C3) is a stone chipping protection coating.

16. Battery tray (1) for a NEV according to at least one of the preceding claims, comprising integrally formed buffer elements (21) for underride protection, the buffer elements establish a protruding plane directed downwards to a street or other underground.

17. Battery tray (1) according to at least one of the preceding claims, comprising a channel groove structure (22) integrally formed with the bottom (2) and a closing plate (23) fluid-tightly fixed with a surface (2U) of the bottom to constitute a heat exchanger for heating and/or cooling the accumulators that are to be placed on top of the bottom or on top of the closing plate.

18. Battery tray (1) for a NEV, according to at least one of the preceding claims, comprising multiple structural beams (11) surrounded by the side wall (3) and fixed to the side wall and/or fixed to an upper surface (2U) of the bottom (2) of the battery tray, preferably at least one structural beam has one or more holes (12) or one or more nut elements to allow a screw connection for fixing the battery tray to the NEV.

19. Battery tray (1) for a NEV, according to at least one of the preceding claims 1, comprising structural rails (13) arranged below the flange (6) and preferable fixed to at least two side wall portions (3.2, 3.4) parallel to opposing sides of the battery tray, the structural rails have holes (14) and/or nut elements to allow a screw connection for fixing the battery tray to the NEV.
